# EUROPEAN PATENT APPLICATION

(11) **EP 4 625 752 A1**
(43) Date of publication of application: **01.10.2025**
(21) Application number: 24167207.0
(22) Date of filing: 28.03.2024
(51) Int. Cl.: H02J 7/00, H02J 9/00, H02J 9/06, H02M 1/36, B60L 1/00

(54) **POWER SUPPLY SYSTEM WITH STARTUP CIRCUIT AND METHOD OF USE THEREOF**

(71) Applicant: Instagrid GmbH, 71636 Ludwigsburg (DE)
(72) Inventor: Gutknecht, Philipp, Mönsheim (DE); Beck, Marlon, Rutesheim (DE)
(74) Representative: Eisenführ Speiser

(57) **Abstract**

A method of managing power transfer between a startup module and a power unit. The startup module includes an auxiliary energy storage element, a first power converter for delivering auxiliary power from the auxiliary energy storage element to a supply node, and a power delivery control circuit connected between an output of the power converter and the supply node and operative for controlling the delivery of the auxiliary power to the supply node. The power unit includes a second power converter for delivering power to the supply node for charging the auxiliary energy storage element. The method includes sensing, via a current sensor, a presence of an auxiliary supply current flowing from the first power converter towards the supply node and, in response to sensing the auxiliary supply current, disabling a charging circuit that charges the auxiliary energy storage element. Related systems and software products are also disclosed.

## Description

### BACKGROUND

### 1. Technical Field

This disclosure relates generally to aspects of electrical power systems such as power inverters and, in some non-limiting embodiments, to power supply systems that include a startup circuit and auxiliary energy storage element.

### 2. Technical Considerations

Mains electric power (e.g., power grid, utility power, domestic power, and/or the like) can be used to power many different types of electrical devices. However, mains electric power may not be readily available or accessible everywhere. For example, to provide electric power at sites lacking a fixed or reliable mains electric power connection, combustion engine-based generators may be used. Such generators can cause local air and noise pollution. Moreover, such generators can be unsuitable for certain applications such as operating in enclosed spaces with limited air circulation.

Power supplies based on electric batteries can be a more suitable alternative to generators, e.g., in terms of quiet operation and no exhaust gases. Power supplies based on electric batteries may include a power unit that includes one or more energy storage elements and one or more inverters for supplying electrical power stored in the one or more energy storage elements to a load. In some cases, a startup circuit or module may be used to control the operation of these power units.

### SUMMARY

In some configurations, the startup module may include an auxiliary energy storage element (e.g., a rechargeable battery, capacitor or their likes) that is used to supply electrical power to the power unit as part of the startup operation. When a power unit is operating, the power unit can supply power to charge the auxiliary energy storage element of the startup module through a charging circuit. However, when the power unit is not operating, the auxiliary energy storage element may continue to discharge its energy if, for example, the charging circuit is not properly disabled in a timely manner. For example, if the charging circuit is not disabled when charging energy becomes unavailable, a local loop may be created within the startup module in which energy from the auxiliary energy storage element is discharged and then returned to itself (e.g., via the charging circuit) thereby draining energy through heat or other leakage. Once the auxiliary energy storage element has discharged its energy, it will have insufficient or no electrical power to power the startup operation (e.g., initialization) of the startup module and/or the startup operation (or initialization) of the power unit.

Accordingly, provided are improved power supply systems that include a startup circuit and auxiliary energy storage element, methods of using such power supply systems, and computer program products for operating such power supply systems (e.g., that overcome some or all of the deficiencies identified above).

According to non-limiting embodiments or aspects, provided is a method of managing power transfer between a startup module and a power unit of a power supply system, wherein the startup module comprises at least one auxiliary energy storage element; a first power converter for delivering auxiliary power to a supply node, wherein the auxiliary power is sourced from the auxiliary energy storage element; and a power delivery control circuit comprising a current sensor disposed to detect current between an output of the first power converter and the supply node, said power delivery control circuit operative for controlling the delivery of the auxiliary power to the supply node; wherein, the power unit comprises: a second power converter for delivering power to the supply node, wherein the power delivered to the supply node is usable for charging the auxiliary energy storage element; and wherein the power supply system further comprises a charging circuit operative for charging the auxiliary energy storage element by receiving charging power via the supply node. Wherein the method comprises: sensing, via the current sensor, a presence of an auxiliary supply current flowing from the output of the first power converter towards the supply node via the power delivery control circuit; and in response to sensing the auxiliary supply current, disabling the charging circuit.

According to non-limiting embodiments or aspects, also provided is a power supply system comprising a startup module and a power unit. The startup module comprising at least one auxiliary energy storage element; a power converter for delivering auxiliary power from the auxiliary energy storage element to a supply node; a charging circuit, e.g., a battery charger, operative for charging the auxiliary energy storage element by receiving charging power via the supply node; a power delivery control element, e.g., a FET or a diode, connected between an output of the power converter and the supply node, said power delivery control element operative for controlling the delivery of the auxiliary power to the supply node; a current sensor for sensing a presence of an auxiliary supply current flowing from the output of the power converter towards the supply node via the power delivery control element. The power unit comprising an AC-DC converter for delivering power to the supply node, wherein the delivered power is usable for charging the auxiliary energy storage element in the startup module. In response to the current sensor sensing the auxiliary supply current, the charging circuit is disabled.

According to non-limiting embodiments or aspects, also provided is a method of controlling the charging of an auxiliary energy storage element of a startup module that includes: a first node (N1) connecting a Vout of a charging circuit, a Vin of a power converter and a terminal of the auxiliary energy storage element, a second node (N2) connecting a Vout of the power converter, a drain terminal of a P-channel FET (P-FET) and an emitter of a first bipolar junction transistor (T1), a third node (N3) connecting a source terminal of the P-FET, an emitter of a second bipolar junction transistor (T2), an emitter of a third bipolar junction transistor (T3), a Vin of the charging circuit, and a voltage output of a power unit, a ground node (N-Gnd) connecting a negative terminal of the auxiliary energy storage element and collectors of T1, T2, and T3 via respective resistors R1, R2, and R3 coupled between the collectors of T1, T2, and T3 and the ground node, a fourth node (N4) connecting a resistor R4 that is coupled between a base of T3 and the fourth node, a collector of T2, and the resistor R2 that is coupled between the ground node and the fourth node, a fifth node (N5) connecting the base and collector of T1 and the resistor R1 that is coupled between the ground node and the fifth node, and a sixth node (N6) connecting the collector of T3 to a disable terminal of the charging circuit. Wherein the method comprises: (a) charging, by the Vout of the charging circuit, the auxiliary energy storage element when a voltage at the second node is less than a voltage at the third node; and (b) not charging the auxiliary energy storage element when a voltage at the second node is greater than a voltage at the third node.

### BRIEF DESCRIPTION OF THE DRAWINGS

Fig. 1 is a schematic of an example power supply including an example startup module and an example power unit in accordance with some non-limiting embodiments or aspects of the present disclosure;
Fig. 2A is a detailed schematic of the example power unit in Fig. 1 in accordance with some non-limiting embodiments or aspects of the present disclosure;
Figs. 2B-2D are schematics of an example energy storage module, according to some non-limiting embodiments or aspects of the present disclosure;
Fig. 3 is a flow diagram of a method in accordance with some non-limiting embodiments or aspects of the present disclosure;
Fig. 4 is a flow diagram of another method in accordance with some non-limiting embodiments or aspects of the present disclosure;
Fig. 5 is a schematic of the example power supply of Fig. 1, including the example startup module and the example power unit, wherein the startup module further includes a feedback circuit in accordance with some non-limiting embodiments or aspects of the present disclosure; and
Fig. 6 is a schematic of an alternative example of a power delivery control circuit that may be used in place of the example power delivery control circuits shown in Figs. 1 and 5.

### DESCRIPTION

Various non-limiting embodiments will now be described with reference to the accompanying figures where like reference numbers correspond to like or functionally equivalent elements.

As used herein, spatial, or directional terms, such as "left", "right", "inner", "outer", "above", "below", and the like, relate to the disclosure as it is shown in the drawing figures. However, it is to be understood that the disclosure can assume various alternative orientations and, accordingly, such terms are not to be considered as limiting. Further, as used herein, all numbers expressing dimensions, physical characteristics, processing parameters, quantities of ingredients, reaction conditions, and the like, used in the specification and claims are to be understood as being modified in all instances by the term "approximately" or "about". Accordingly, unless indicated to the contrary, the numerical values set forth in the following specification and claims may vary depending upon the desired properties sought to be obtained by the present disclosure.

At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 3.3, 4.7 to 7.5, 5.5 to 10, and the like. "A" or "an" refers to one or more.

**As** used herein, "coupled", "coupling", and similar terms refer to two or more elements that are joined, linked, fastened, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations.

In this disclosure, the terms "electrical power system," "electrical system," "power supply," and "power supply system" may be used interchangeably. Those skilled in the art shall appreciate that the present teachings can be applied in such suitable systems without limitation of scope and generality of the present teachings.

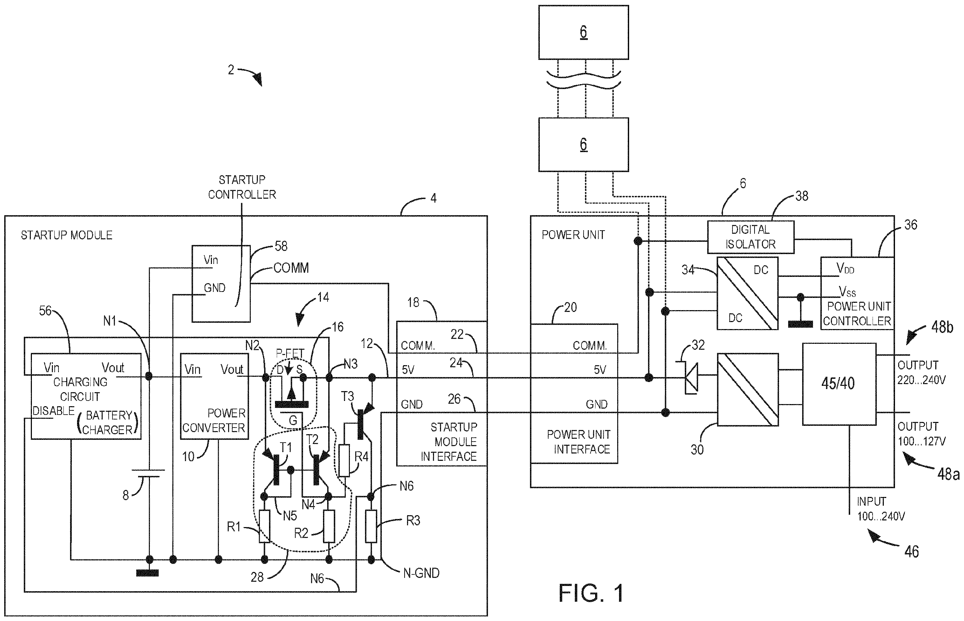

With reference to Fig. 1, in some non-limiting embodiments, a power supply system 2 in accordance with the principles of the present disclosure may include a startup module 4 that may be coupled to one or more power units 6.

In some non-limiting embodiments, the startup module 4 may include at least one auxiliary energy storage element 8, e.g., a rechargeable battery or capacitor, and a power converter 10 for delivering auxiliary power from the auxiliary energy storage element 8 to a supply node 12 via a power delivery control element 16, e.g., a P-channel field effect transistor (P-FET), of a power delivery control circuit 14 that may also include a current sensor or current sensing circuit 28 described hereinafter.

In some non-limiting embodiments, the power converter 10 may be a boost converter (e.g., a DC-to-DC step-up converter) adapted to increase voltage while decreasing current from its input (Vin) terminal to its output (Vout) terminal. By way of example, power converter 10 may be adapted to convert a nominal voltage at its input provided by the auxiliary energy storage element 8, e.g., 3.6V, to an increased voltage at its output of, e.g., 5V. As will be described in further detail below, the voltage output by power converter 10 may be used to supply power to a power unit controller 36 of a power unit 6.

In some non-limiting embodiments, the startup module 4 may include a startup module interface 18 that may be coupled to a power unit interface 20 of one or more (e.g., each) power unit 6, directly or indirectly (e.g., through one or more intermediate power units 6 connected in series). In an example, the startup module interface 18 and each power unit interface 20 facilitate the coupling or sharing of a communication channel, bus or line 22 (e.g., a digital bus such as a controller area network bus (CAN-bus) or their likes), a power line 24, and a ground line 26 between the startup module 4 and one or more (e.g., each) power unit 6, wherein the communication channel proceeds from startup module 4 to a first power unit 6 in a series of power units 6, then proceeds from the first power unit 6 to a second power unit 6 in the series of power units 6, and so forth until the communication channel has reached the last power unit 6 in the series of power units 6.

In some non-limiting embodiments, the startup module 4 may include the current sensor or current sensing circuit 28 that is operative or configured for sensing a presence of an auxiliary supply current flowing from the output of the power converter 10 towards the supply node 12 via the power delivery control element 16. Further details regarding the current sensing circuit 28 are provided below. The power delivery control element 16 may be operative for controlling the delivery of the auxiliary power from the power converter 10 to the supply node 12. The power delivery control element 16, current sensing circuit 28, and charging circuit 56 (described below) need not be part of startup module 4, and in some non-limiting embodiments, may be positioned elsewhere within power supply system 2 (e.g., as part of power unit 6 or in an intermediate module or unit positioned between startup module 4 and power unit 6).

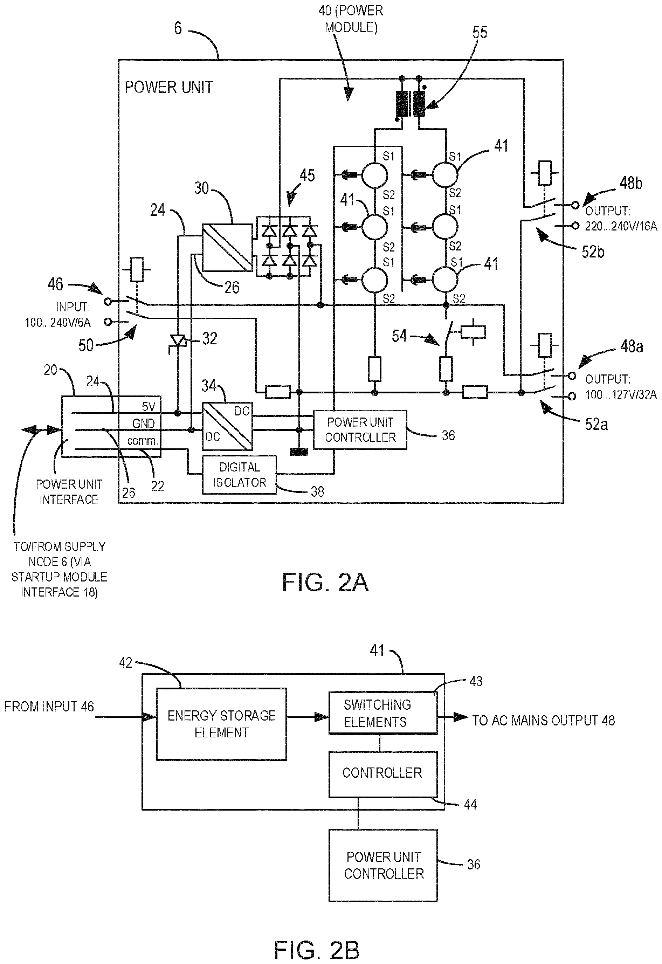

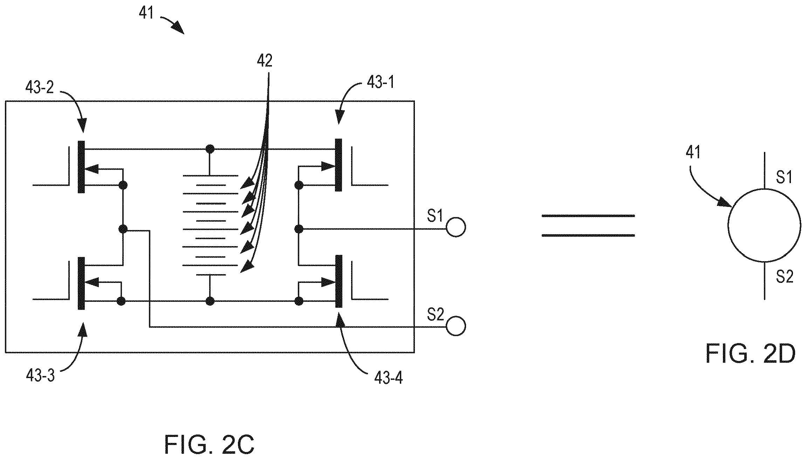

The power supply system 2 may include one or more power units 6, the mains output of these power units 6 may be connected in series or parallel to supply electrical power to a load. With reference Figs. 2A and 2B, and with continuing reference to Fig. 1, in some non-limiting embodiments, each power unit 6 may include a power converter or simply converter 30, e.g., an AC-DC converter, a DC-DC converter, or an AC-DC converter with an input rectifier on the AC input side, that is coupled to and is operative or configured for delivering DC electrical power to or toward the power line 24 and the ground line 26 of the supply node 12. As will be described in further detail below, this DC electrical power provided by converter 30 over power line 24 may be used to charge auxiliary energy storage element 8. Each power unit 6 may also include a diode 32, e.g., a Schottky diode, that may be coupled to the power line 24 in a forward bias mode from a voltage terminal of the converter 30 to the supply node 12. In an example, the diode 32 may be part of the converter 30, such as in the form of an AC-DC converter with a flyback topology.

In some non-limiting embodiments, each power unit 6 may also include a DC-DC converter 34 coupled to the power line 24 and the ground line 26. The DC-DC converter 34 of each power unit 6 may be operative or configured for converting a voltage level of DC power on the power line 24 to a voltage level of DC power useable by a power unit controller 36 of the power unit 6. In some non-limiting embodiments, the DC-DC converter 34 may be electrically isolated such that it can connect a ground terminal of the power unit controller 36 to a common node. The power line 24 may receive its electrical power from the converter 30 or the power supply node 12, whereupon the power unit controller 36 may be powered by the converter 30 or by auxiliary power delivered from the auxiliary energy storage element 8 via the supply node 12. Each power unit 6 may also include a digital isolator 38 coupled in-line between a communication terminal of the power unit controller 36 and the communication channel or line 22 to convey data on communication channel 22 over an isolation barrier.

With reference to Figs. 2A-2B and with continuing reference to Fig. 1, in some non-limiting embodiments, each power unit 6 may also include a power module 40. In some non-limiting embodiments, the power module 40 may include at least one energy storage module 41. A configuration with six energy storage modules 41 is shown in Fig. 2A. However, other configurations are also available, including a configuration in which 24 energy storage modules 41 are connected together.

In some non-limiting embodiments or aspects, energy storage module 41 may be the same as or similar to or include at least some components that are the same as or similar to the battery modules described in at least one of U.S. Patent Application Pub. No. 2022/0037891, U.S. Patent Application Pub. No. 2022/0247030, U.S. Patent Application Pub. No. 2022/0359918, U.S. Patent Application Pub. No. 2022/0360094, U.S. Provisional Patent Application No. 63/556,996, filed February 23, 2024, and/or European Patent Application No. 24161854.5, filed March 6, 2024, the disclosures of each of which are hereby incorporated by reference in their entireties.

In the example shown in Figs. 2B-2D, each energy storage module 41 may include at least one (e.g., six) energy storage component 42, e.g., a lithium battery cell and/or a super capacitor, and at least one switching element (e.g., first switching element 43-1, second switching element 43-2, third switching element 43-3, and/or fourth switching element 43-4, collectively referred to as "switching elements 43," and individually referred to as "switching element 43"), first electrical connection S1, and second electrical connection S2. In some non-limiting embodiments or aspects, switching elements 43 may be part of (e.g., integrated on, connected to, and/or the like) a module controller 44.

In some non-limiting embodiments or aspects, switching elements 43 may be switched (e.g., opened, closed, activated, deactivated, and/or the like) to selectively connect energy storage component(s) 42 to first electrical connection S1 and/or second electrical connection S2, e.g., to control a module voltage across first electrical connection S1 and second electrical connection S2. For example, switching elements 43 may be switched so that (1) first electrical connection S1 and second electrical connection S2 are both connected to negative side (e.g., DC minus) of energy storage component(s) 42, (2) first electrical connection S1 is connected to the negative side (e.g., DC minus) of energy storage component(s) 42 and second electrical connection S2 is connected to the positive side (e.g., DC plus) of energy storage component(s) 42, or (3) first electrical connection S1 is connected to the positive side (e.g., DC plus) of energy storage component(s) 42 and second electrical connection S2 is connected to the negative side (e.g., DC minus) of energy storage component(s) 42. As such, the voltage across first electrical connection S1 and second electrical connection S2 may be zero, negative, or positive, respectively.

For the purpose of illustration, and by way of example only, to connect both first electrical connection S1 and second electrical connection S2 to the negative side (e.g., DC minus) of energy storage component(s) 42, fourth switching element 43-4 and third switching element 43-3 may both be activated (e.g., closed, set to act as a closed switch, and/or the like), while second switching element 43-2 and first switching element 43-1 are deactivated (e.g., open, set to act as an open switch, and/or the like). To connect first electrical connection S1 to the negative side (e.g., DC minus) and connect second electrical connection S2 to the positive side (e.g., DC plus) of energy storage component(s) 42, fourth switching element 43-4 and second switching element 43-2 may be activated, while third switching element 43-3 and first switching element 43-1 are deactivated. To connect first electrical connection S1 to the positive side (e.g., DC plus) and second electrical connection S2 to the negative side (e.g., DC minus) of energy storage component(s) 42, first switching element 43-1 and third switching element 43-3 may be activated, and fourth switching element 43-4 and second switching element 43-2 may be deactivated. In other words, the switching elements 43 may be operated to be in states such as: a high-impedance (Hi-Z) state: in which all of the switching elements 43 are deactivated; a bypass state: in which the low-side switching elements 43-3 and 43-4 are activated while the high-side switching elements 43-1 and 43-2 are deactivated; and two polarity states in which the energy storage component(s) 42 are connected between the first electrical connection S1 and the second electrical connection S2 in opposite polarity manner.

In some non-limiting embodiments or aspects, each switching element 43 may include at least one of a transistor (e.g., bipolar transistor, field-effect transistor (FET), metal-oxide-semiconductor field-effect transistor (MOSFET), and/or the like), a switch, a contactor, any combination thereof, and/or the like. The energy storage module 41 may include one or more driver circuits, such as a gate driver circuit, for driving each switching element 43. For example, the driver circuits may be part of (e.g., integrated on, connected to, and/or the like) module controller 44.

In some non-limiting embodiments or aspects, each switching element 43 may be driven, or controlled, via a module controller 44 or by power unit controller 36 which may control switching element 43 directly or provide commands to module controller 44. For example, module controller 44 may control the switching elements 43 to selectively connect energy storage component(s) 42 to first electrical connection S1 and/or second electrical connection S2, as described herein. For example, module controller 44 may be connected to each switching element 43 in order to drive, or optionally control, such switching element 43. In some non-limiting embodiments or aspects, the module controller 44 provides signals to the gate driver circuit for driving the switching elements 43.

For purposes of other figures herein, each energy storage module 41 may be represented by the symbol shown in Fig. 2D.

Each energy storage module 41 may also include a module controller 44 that is programmed or configured to control the operation of the switching elements 43 to output the AC output power in response to command(s) from the power unit controller 36. Module controller 44 may include first level battery management system data acquisition circuitry that allows the power unit controller 36 to read relevant battery parameters and/or general-purpose input/output options that can be set and read by the power unit controller 36.

In some non-limiting embodiments or aspects, power unit controller 36 may include a controller and associated circuitry. For example, power unit controller 36 may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function. In some non-limiting embodiments or aspects, power unit controller 36 may be communicatively connected to energy storage module(s) 41 (e.g., module controller(s) 44 thereof) by a communication connection.

In some non-limiting embodiments or aspects, power unit controller 36 may command module controller(s) 44 of energy storage module(s) 41 to generate an output voltage based on a combination (e.g., sum and/or the like) of the respective module voltage of each respective energy storage module 41, as described herein. For example, by sequentially connecting multiple energy storage module(s) 41 in series in a time-shifted manner, a combined (e.g., summed) voltage may approximate an AC voltage waveform having a target amplitude (e.g., a voltage substantially equal to the nominal voltage of mains electric power, such as 100-127 V, 200-240 V, and/or the like) and/or a target frequency (e.g., a frequency substantially equal to the nominal frequency of mains electric power, such as 60 Hz, 50 Hz, and/or the like), as described herein.

In some non-limiting embodiments or aspects, power unit controller 36 may command module controller(s) 44 of energy storage module(s) 41 to cause a respective duty cycle of a respective module voltage of each respective energy storage module 41 to generate an output voltage based on a combination (e.g., sum and/or the like) of the respective module voltage of each respective energy storage module 41, as described herein. For example, by modulating the duty cycle differently for multiple energy storage module(s) 41 connected in series, a combined (e.g., summed) voltage may approximate (e.g., better approximate) an AC voltage waveform having a target amplitude and/or a target frequency, as described herein. In some non-limiting embodiments or aspects, the duty cycle of the respective module voltage may relate to a switched voltage scheme such as a pulse-width modulation (PWM) type waveform. For example, power unit controller 36 may command module controller(s) 44 of energy storage modules 41 to switch their output voltage with certain frequency and/or duty-cycle. The exact number or range of the switching frequency is not essential to the scope or generality of the teachings of the present disclosure. Various energy storage modules 41 may be orchestrated, e.g., by power unit controller 36, to generate an output voltage based on a combination of the respective module voltage of each respective energy storage module 41, as described herein. As such, voltage from the individual energy storage modules 41 (e.g., DC voltage) may be converted to suitable output voltages (e.g., AC voltages suitable for electrical devices designed to be connected to mains electric power in different regions).

Each power unit 6 may also include at least one AC mains input 46 for receiving from an external AC source mains input power, e.g., 110 V, for charging the energy storage components(s) 42 of the energy storage module 41 and for charging the auxiliary energy storage element 8 via the converter 30 and the supply node 12. Each power unit 6 may also include at least one AC mains output 48 for providing the AC output power output by the energy storage module(s) 41 of the power module 40 to a load. In an example, the power module 40 may include the six energy storage modules 41 shown in Fig. 2A that may be programmed or configured to cooperate under the control of the power unit controller 36, to output AC output power to the load.

In some non-limiting embodiments, converter 30 may have a wide-range, input, e.g., between 85 VAC and 264 VAC, and a low voltage (e.g., 5 VDC) output that may be isolated from its input. Converter 30 may be coupled to the power module 40 via a rectifier 45 and configured such that the converter 30 is active regardless of whether voltage selection switch 54 (described below) is set to a closed state or an open state. As depicted in Fig. 2A, the rectifier 45 may be comprised of six diodes. In some non-limiting embodiments, the converter 30 may include an internal rectifier bridge, thereby allowing the converter 30 to be operated from pulsating DC current.

In some non-limiting embodiments, each power unit 6 may include an input switch 50 that may be switched, e.g., under the control of the power unit controller 36, between a closed state and an open state for coupling and decoupling the AC mains input 46 to and from the power module 40. When the input switch 50 is in the closed state, the energy storage component(s) 42 of each energy storage module(s) 41 may be charged, via the AC mains input 46, from an external mains source. When the input switch 46 is in an open state, the power module 40 is isolated from the AC mains input 46.

In some non-limiting embodiments, each power unit 6, may include an output switch 52 that may be switched, e.g., under the control of the power unit controller 36, between a closed state and an open state for coupling and decoupling the AC mains output 48 to and from the power module 40. When the output switch 52 is in the closed state, mains AC output power may be provided from the energy storage component(s) 42 and the switching element(s) 43 of the energy storage module(s) 41 of the power module 40 to a load via the AC mains output 48. When the output switch 52 is in an open state, the power module 40 is isolated from the AC mains output 48.

In some non-limiting embodiments, each power unit 6 may include first and second AC mains outputs 48a and 48b for providing, from the power module 40, different voltages of mains output power via first and second output switches 52a and 52b. In an example, first output switch 52a in a closed state may provide from the power module 40 an output voltage between 100 volts and 127 volts to an external load via mains output 48a. When the output switch 52a is in an open state, the power module 40 may be isolated from the mains output 48a. In another example, output switch 52b in a closed state may provide from the power module 40 an output voltage between 220 volts and 240 volts to an external load via mains output 48b. When the output switch 52b is in an open state, the power module 40 may be isolated from the mains output 48b. The output switches 52a and 52b may be controlled, e.g., the power unit controller 36, whereupon only one output switch 52a and 52b at a time may be in a closed state.

In some non-limiting embodiments, each power unit 6 may include the power module 40 including, in this example, a plurality of energy storage modules 41 and a voltage selection switch 54 that may be operated, e.g., under the control of the central controller 36, for selectively connecting the plurality of energy storage modules 41 in series or a parallel. In an example, voltage selection switch 54 may be set or switched to a closed state whereupon the energy storage modules 41 on the left in Fig. 2A are connected in parallel with the energy storage modules 41 on the right in Fig. 2A, whereupon the energy storage modules 41 in Fig. 2A are connected to provide an output voltage, e.g., between 100 volts and 127 volts to an external load via the mains output 48a when output switch 52a is in a closed state. In another example, voltage selection switch 54 may be set or switched to an open state whereupon the energy storage modules 41 on the left in Fig. 2A are connected in series with the energy storage modules 41 on the right in Fig. 2A, whereupon the plurality of energy storage modules 41 in Fig. 2A are connected to provide an output voltage, e.g., between 220 volts and 240 volts to an external load via the mains output 48b when output switch 52b is in a closed state.

It shall be appreciated that specifying a particular mains electric power frequency is not essential to the scope and generality of the teachings of the present disclosure, as different frequencies as desired can be implemented by driving the energy storage modules 41 as required. As an example, the 110 V AC may be delivered at or around 60 Hz frequency (e.g., as common in the United States). However, it is also possible to deliver 110 V AC at other frequencies, such as 50 Hz. As another example, the AC frequency may be at or around 50 Hz (e.g., as common in Europe). However, it is also possible to deliver 220 V AC at other frequencies, such as 60 Hz.

In some non-limiting embodiments or aspects, each switch described in this disclosure may include at least one of a switch, a contactor, any combination thereof, and/or the like. For example, each switch may include at least one of a single pole single throw (SPST) switch, a double pole double throw (DPDT) switch, a single pole double throw (SPDT) switch, a double pole single throw (DPST) switch, any combination thereof, and/or the like.

In some non-limiting embodiments or aspects, a choke 55 may be connected to first set of energy storage modules 41 (e.g., the three energy storage modules 41 on the left hand side) and second set of energy storage modules 41 (e.g., the three energy storage modules 41 on the right hand side). For example, as shown in Fig. 2A, choke 55 may be connected to first electrical connection S1 of one energy storage module 41 of the first set and to first electrical connection S1 of one energy storage module 41 of the second set.

In some non-limiting embodiments or aspects, choke 55 may include a first winding (e.g., a first inductor), a second winding (e.g., a second inductor), and a core (e.g., a toroidal core). In some non-limiting embodiments or aspects, the first winding of choke 55 may be connected to first set (e.g., the left hand side) of energy storage modules 41. Additionally or alternatively, the second winding of choke 55 may be connected to second set (e.g., the right hand side) of energy storage modules 41. In some non-limiting embodiments or aspects, choke 55 may be in the form of a center-tapped inductor. For example, choke 55 may include a connection such that the choke is between first set and second set of energy storage modules 41 when first set and second set are in series.

Choke 55 may be configured such that there is reduced (e.g., little or no) inductive impedance to load currents through the first and second sets of energy storage modules 41, and thus no, or significantly reduced, impedance to the combined load current (e.g., the total load current). For example, a first magnetic flux of the first winding caused by a first load current through a first set of energy storage modules 41 may combine subtractively with a second magnetic flux of the second winding caused by a second load current through a second set of energy storage modules 41. It shall be appreciated that the total load current in this case may be a combination (e.g., sum) of the first load current and the second load current.

Additionally, choke 55 may impede a loop (e.g., circular) current which may sometimes flow between the first and second sets of energy storage modules 41. Such a loop current may arise, e.g., from a mismatch between the first and second sets of energy storage modules 41. For example, due to a mismatch between the energy storage modules 41 of the two sets, a loop current may tend to flow between the first set and the second set, and the direction of the flow of the loop current may depend upon the relative mismatch between the first and second sets. In other words, it may happen that one of the two sets of energy storage modules 41 is generating slightly higher voltage than the other and/or slightly higher current than the other. In such cases, a loop current (e.g., proportional to this voltage difference and/or current different) may tend to flow from the set producing a higher voltage and/or current towards the other set producing a lower voltage and/or current. The choke 55 may impede such loop current by reacting to the difference in current (e.g., caused by a difference of voltages) between the first set and the second set. Thus, the combined load current can flow essentially inductively unimpeded through the choke 55, while the loop current is inductively impeded.

Referring back to Fig. 1 and with continuing reference to Figs. 2A and 2B, as described above, the startup module 4 may comprise at least one auxiliary energy storage element 8 and the power converter 10 for delivering auxiliary power from the auxiliary energy storage element 8 to the supply node 12. In some non-limiting embodiments, the startup module 4 may comprise a charging circuit 56, e.g., a battery charger, operative for charging the auxiliary energy storage element 8 by receiving charging power via the supply node 12. As described above, the power delivery control element 16 may be operative for controlling the delivery of the auxiliary power from the auxiliary energy storage element 8 to the supply node 12 and the current sensor 28 may be operative for sensing a presence of the auxiliary supply current flowing from the output of the power converter 10 toward the supply node 12 via the power delivery control element 16. The power unit 6 may comprise the converter 30 for delivering electrical power to the supply node 12, wherein the delivered electrical power is usable for charging the auxiliary energy storage element 8 in the startup module 4, when the power unit 6 is providing AC mains output power. In response to the current sensor 28 sensing the auxiliary supply current, the charging circuit 56 may be disabled via a disable input of the charging circuit 56. Disabling the charging circuit 56 may prevent generation of a local energy loop within the startup module 4 in which energy from the auxiliary energy storage element 8 is circulated through power converter 10 and charging circuit 56 and returned to auxiliary energy storage element 8.

In some non-limiting embodiments, the power unit 6 may comprise the DC-DC converter 34 for powering the power unit controller 36 with power supplied either by the converter 30 or with auxiliary power from the auxiliary energy storage element 8 via the supply node 12, such as when the converter 30 is not operational or is not supplying sufficient power to the power unit controller 36. For example, if the power unit 6 ceases generating an AC waveform due to, e.g., an emergency stop, the converter 30 would no longer supply energy to the power unit controller 36. However, it may still be desired to allow the power unit controller 36 to remain operational for some amount of time in order to extract or provide data for debugging/servicing of the power unit 6, and the necessary power can be supplied from the auxiliary energy storage element 8 via the supply node 12. In some non-limiting embodiments, the startup module 4 may further comprise a startup controller 58 which may be powered via the auxiliary energy storage element 8. The startup controller 58 may also manage functions of the startup module 4 and/or provide control and other signals to the power unit 6.

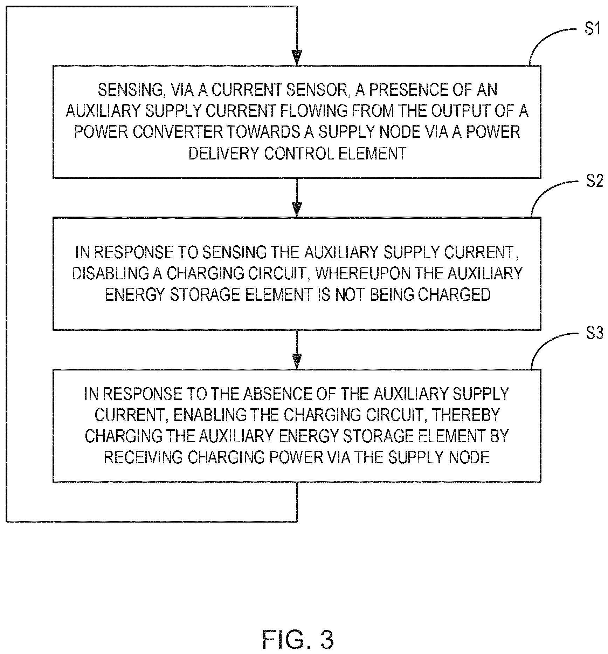

With reference to Fig. 3 and with continuing reference to Figs. 1-2D, in some non-limiting embodiments, a method of managing power transfer between the startup module 4 and the power unit 6 may include a step S1: sensing, via the current sensor 28, the presence of the auxiliary supply current flowing from the output of the power converter 10 towards the supply node 12 via the power delivery control element 16. The method may include a step S2: wherein, in response to the current sensor 28 sensing the presence of the auxiliary supply current, e.g., when the voltage at the output of the power converter 10 is greater than the voltage at the supply node 12 and the power delivery control element 16 is on or conducting, the charging circuit 56 may be disabled whereupon the auxiliary energy storage element 8 is not being charged.

In some non-limiting embodiments, the method may also include a step S3: wherein in response to the current sensor 28 sensing the absence of the auxiliary supply current, e.g., when the voltage at the output of the power converter 10 is less than the voltage at the supply node 12 and the power delivery control element 16 is off or not conducting, the charging circuit 56 may be enabled, whereupon the auxiliary energy storage element 8 is charged by the charging circuit 56 receiving charging power via the supply node 12 from the power unit 6 (e.g., from the converter 30).

In some non-limiting embodiments, the method may include, in response to the absence of the auxiliary supply current, further reducing or terminating the voltage at the output of the power converter 10. In some non-limiting embodiments, this may act to stabilize the biasing conditions in the circuit which are unlikely to change (e.g. in the case of an emergency stop of power unit 6).

In some non-limiting embodiments, the energy storage system 2 may comprise a switch (e.g., the power delivery control element 16 (e.g., P-FET) and/or a transistor T3 (described hereinafter)) responsive to a voltage at an output of the power converter 10 and a voltage at the supply node 12 for respectively disabling and enabling the charging circuit 56 in the respective presence and absence of the auxiliary supply current.

In some non-limiting embodiments, the current sensor 28 may comprise bipolar junction transistors T1 and T2 coupled to the respective output of the power converter 10 on one side of the power delivery control element 16 and the supply node 12 on another side of the power delivery control element 16. In some non-limiting embodiments, the power delivery control circuit 14 comprising the current sensor 28 and the power delivery control element 16 may operate in the manner or nature of a so-called "ideal diode" that acts as a conductor that allows electric current to flow with significantly reduced loss when compared to a conventional diode under forward bias and an insulator that exhibits a small amount of reverse current or leakage current under reverse bias.

In some non-limiting embodiments, the startup module 4 may include a first node N1 connecting a Vout terminal of the charging circuit 56, a Vin terminal of the power converter 10 and a terminal, e.g., a positive terminal, of the auxiliary energy storage element 8. The startup module 4 may also include a second node N2 that may connect a Vout terminal of the power converter 10, a drain terminal of the power delivery control element 16 and an emitter of the transistor T1. The startup module 4 may also include, a third node N3, which may be the supply node 12, connecting a source terminal of the power delivery control element 16, an emitter of the transistor T2, an emitter of a third bipolar junction transistor T3, a Vin terminal of the charging circuit 56, and a voltage output, e.g., the power line 24, of the power unit 6. Herein, the terms "third node N3" and "supply node 12" may be used interchangeably.

The startup module 4 may also include, a ground node (N-Gnd) connecting a negative terminal of the auxiliary energy storage element 8 and collectors of transistors T1, T2, and T3 via respective resistors R1, R2, and R3. The startup module 4 may also include, a fourth node (N4) connecting a resistor R4 that is coupled between a base of transistor T3 and the fourth node N4, a collector of transistor T2, and the resistor R2 that is coupled between the ground node N-Gnd and the fourth node N4.

The startup module 4 may also include, a fifth node (N5) connecting the base and collector of transistor T1 and the resistor R1 that is coupled between the ground node N-Gnd and the fifth node N5. Finally, the startup module 4 may also include a sixth node (N6) connecting the collector of transistor T3 to the disable terminal of the charging circuit 56 and to ground node N-Gnd via a resistor R3.

In some non-limiting embodiments, when the disable terminal of the charging circuit 56 is asserted, e.g., when the disable terminal is coupled via transistor T3 to a positive voltage present at the third node N3, the charging circuit 56 is off or disabled whereupon the charging circuit 56 is not charging the auxiliary energy storage element 8. Conversely, when the disable terminal of the charging circuit 56 is not asserted, e.g., when the disable terminal is coupled to the ground node N-Gnd via resistor R3, the charging circuit 56 is on or enabled whereupon the charging circuit 56 charges the auxiliary energy storage element 8. Stated differently, when the disable terminal of charging circuit 56 is asserted (e.g., by being coupled to a positive voltage) the Vout terminal of the charging circuit 56 is off whereupon the auxiliary energy storage element 8 is not being charged. In contrast, when the disable terminal of charging circuit 56 is not asserted (e.g., by being coupled to N-Gnd when transistor T3 is off) the Vout terminal of the charging circuit 56 is on whereupon the auxiliary energy storage element 8 is being charged.

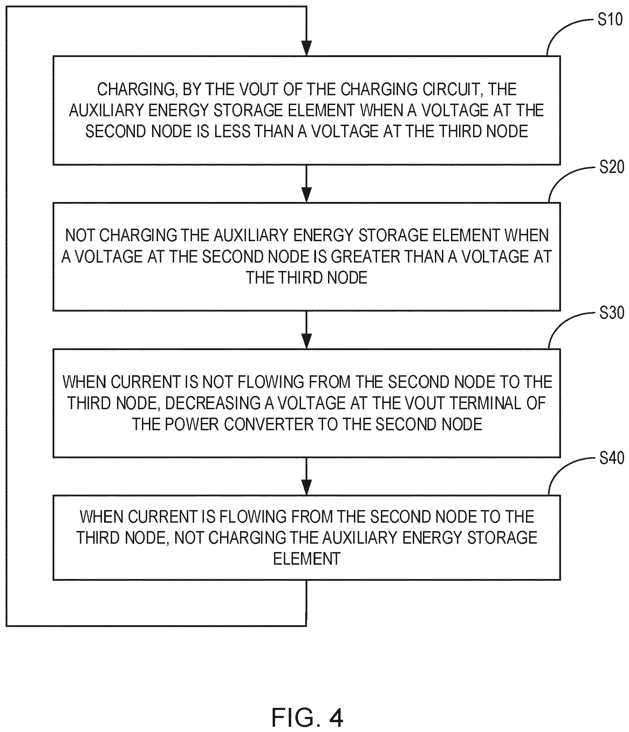

With reference to Fig. 4 and with continuing reference to Fig. 1, in some non-limiting embodiments, a method of controlling the charging of the auxiliary energy storage element 8 of the startup module 4 may include a step S10: charging, by the Vout terminal of the charging circuit 56, the auxiliary energy storage element 8 when a voltage at the second node N2 is less than a voltage at the third node N3, e.g., when the power unit 6 is working and supplying power to at least the third node N3 and desirably to the AC mains output 48. In step S10, when charging, by the Vout terminal of the charging circuit 56, the auxiliary energy storage element 8, transistor T1 may be conducting (e.g., due to the presence of output voltage of power converter 10). The voltage on the fifth node N5 may be approximately the voltage at the second node N2 minus any forward drop of T1, which could depend, e.g., on a current set by R1 and the junction temperature. Transistor T2 can sense the difference in voltage between the fifth node N5 and the third node N3, thereby causing T2 to be conducting. As a result, the voltage at the fourth node N4 can be pulled up to a value approaching the voltage at the third node N3. From a digital perspective, the voltage at the fourth node N4 may be interpreted as a logical 1. As a consequence of the voltage at the fourth node N4 being close to that of the third node N3, transistor T3 may be off (or not conducting) (e.g., because no base current exists at T3). In this state, the power delivery control element 16 may be off (or not conducting) (e.g., because no voltage exists at the control terminal of the power delivery control element 16, which in this example is the gate terminal of the P-FET), whereupon the auxiliary supply current is not flowing through the power delivery control element 16.

In step S10, when transistor T3 is off, the sixth node N6 may be coupled to the ground node N-Gnd via resistor R3 which can pull the sixth node N6 toward 0 volts, whereupon the disable terminal of the charging circuit 56, which is also coupled to the sixth node N6, is not asserted whereupon the Vout of the charging circuit 56 is on and outputting a voltage that charges the auxiliary energy storage element 8. From a digital perspective, the sixth node N6 resembles a logical 0 in this configuration.

In step S10, the current sensor 28, which may comprise transistors T1 and T2 and resistors R1 and R2, may cause the power delivery control element 16 to be off (or not conducting) when the voltage at the third node N3 (i.e., the supply node 12) is greater than the voltage that is being output on the second node N2 by the power converter 10. In this example, the voltage at the third node N3 is greater than the voltage that is being output on the second node N2 by the power converter 10 when the power unit 6 is working and supplying power to at least the third node N3.

In some non-limiting embodiments, the method may further include a step S20: not charging the auxiliary energy storage element 8 when a voltage at the second node N2 is greater than a voltage at the third node N3, e.g., when the power unit 6 is not working. In step S20, when not charging, by the Vout terminal of the charging circuit 56, the auxiliary energy storage element 8, transistor T1 may be conducting (e.g., due to the presence of output voltage of power converter 10). Due to the difference in voltage between the second node N2 and the third node N3, the internal body diode of power delivery control element 16 will become conductive and pull the voltage at the third node N3 toward that of the second node N2, minus the forward voltage drop of said body diode. In this example, the voltage on the fifth node N5 is the same as the voltage on the second node N2 minus any forward drop of transistor T1. Transistor T2 can sense the voltage difference between the voltage on the fifth node N5 and the voltage on the third node N3, which in this case can be small and dependent on the relative forward voltage drops discussed above, thereby causing a collector current at transistor T3 to be approaching 0 amps and a voltage at the fourth node N4 to be approaching 0 volts. As the voltage at the fourth node N4 approaches 0 volts, this can generate a voltage difference between the gate and source terminals of the internal body diode of the power delivery control element 16, causing it to again become conductive which again causes the voltage drop across the gate and source terminals to become smaller and the voltage at the third node N3 to approach the voltage at the second node N2. As the voltage at the third node N3 approaches the voltage at the second node N2, transistor T2 may start to become conductive and pull up the voltage at the fourth node N4 until an equilibrium state may be reached. Because, even in an equilibrium state, the voltage at the fourth node N4 remains below the voltage at the third node N3, transistor T3 may be conducting (e.g., fully conducting), causing the voltage at the sixth node N6 to approach the voltage at the third node N3. In this state, the power delivery control element 16 may be conducting, whereupon the auxiliary supply current is flowing from the second node N2 to the third node N3.

In step S20, when transistor T3 is on, the voltage present at the third node N3, when the power unit 6 is not working and the power delivery control element 16 is conducting, may be coupled via transistor T3 and the sixth node N6, to the disable terminal of the charging circuit 56 which is thereby asserted whereupon the Vout terminal of the charging circuit 56 is disabled or off and not outputting a voltage whereupon the auxiliary energy storage element 8 is not being charged. As mentioned, because transistor T3 is on, the voltage at the sixth node N6 is approaching the voltage at the third node N3 (which is approximately the voltage at the second node N2). From a digital perspective, the voltage at the sixth node N6 may be interpreted as a logical 1 in this scenario. In this sense, transistor T3 may be said to cause the generation of a signal or voltage at the sixth node N6 which, in turn, may assert the disable terminal of the charging circuit 56.

In step S20, the current sensor 28, which may include transistors T1 and T2 and resistors R1 and R2, may cause the power delivery control element 16 to be on (or conducting) when the voltage output by the power converter 10 at the second node N2 is greater than the voltage present at the third node N3. In this example, the voltage at the third node N3 will be less than the voltage at the second node N2 due to the voltage drop Vds across the drain and source terminals of the power delivery control element 16 when the power delivery control element 16 is on (or conducting) and the power unit 6 is not working and supplying power to at least the third node N3.

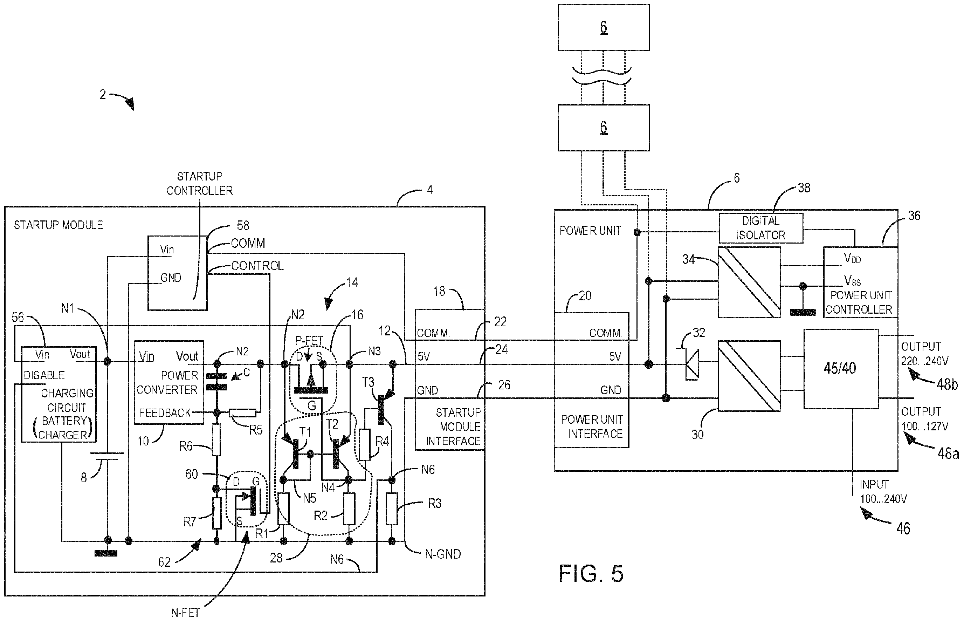

With reference to Fig. 5 and with continuing reference to all previous figures, in some non-limiting embodiments the startup module 4 may further include the second node N2 connected to an optional feedback input of the power converter 10 via a resistor R5 and an optional parallel capacitor (C). The feedback input of the power converter 10 may be further coupled to the ground node (N-Gnd) via series resistors R6 and R7 (which form a resistive voltage divider), wherein one terminal of resistor R7 is connected to the ground node (N-Gnd). An N-channel FET (N-FET) 60 may have a drain terminal connected to a node between resistors R6 and R7, a source terminal connected to the ground node (N-Gnd), and a gate terminal connected to a control output of the startup controller 58. The combination of the optional capacitor C, resistors R5-R7 and N-FET 60 connected as described above may form or comprise a feedback circuit 62.

In some non-limiting embodiments, the feedback circuit 62 may be operative under the control of the startup controller 58 for respectively increasing and decreasing a voltage output by the power converter 10 to the second node N2 in response to the startup controller 58 which may be programmed or configured to determine from the power unit controller 36 that the power unit 6 is (or will soon be) supplying and is not (or will soon not be) supplying mains output power to the AC mains output 48 of the energy storage system 2. In one non-limiting embodiment, this determination may be based on an actual powered up condition of the power unit 6. In another non-limiting embodiment, this determination may be based on an assumption that the power unit 6 has been powered up. For example, if power to the power unit controller 36 was turned on a set amount of time ago (e.g., one second ago), it may be assumed that the power module 40 and the converter 30 should now be powered up. Under this assumption, the voltage output by the power converter 10 may be modified, e.g., increased, in order to provide a proper biasing voltage to the second node N2.

For example, when the power delivery control element 16 is off or not conducting, e.g., step S1 above, the voltage at the second node N2 is less than the voltage at the third node N3, the power unit 6 is on or working and the disable input of the charging circuit 56 is not asserted, whereupon the charging circuit 56 is on and charging the auxiliary energy storage element 8. If the charging circuit 56 is on and charging the auxiliary energy storage element 8, switching, by the startup controller 58, the N-FET 60 to conduct between its drain and source terminals causes a voltage at the feedback input of the power converter 10 to decrease by coupling said feedback input to the ground node N-Gnd via resistor R6 and the drain and source terminals of the N-FET 60. As a result, a voltage at the Vout terminal of the power converter 10 to the second node N2 may be decreased. To this end, the method of Fig. 4 may include a step S30 wherein, when current is not flowing from the second node N2 to the third node N3, e.g., when the power delivery control element 16 is off or not conducting, a voltage at the Vout terminal of the power converter 10 to the second node N2 may be decreased.

In this example, the voltage at the Vout terminal of the power converter 10 to the second node N2 may be decreased in response to the startup controller 58 determining from the power unit controller 36 that the power unit 6 is (or will soon be) supplying mains output power to the AC mains output 48 of the energy storage system 2. This decrease in voltage at the second node N2 may be sensed by the current sensor 28 which, in combination with transistor T3 and resistors R3 and R4, may cause the disable input of the charging circuit 56 to not be asserted whereupon the charging circuit 56 is enabled and charging the auxiliary energy storage element 8 with power from the power unit 6.

On the other hand, when the power delivery control element 16 is conducting, e.g., when the voltage at the second node N2 is greater than the voltage at the third node N3, the auxiliary energy storage element 8 may not be charged. To this end, the method of Fig. 4 may include a step S40 wherein, when current is flowing from the second node N2 to the third node N3, e.g., when the power delivery control element 16 is conducting, the auxiliary energy storage element may not be charged.

For example, when the power delivery control element 16 is on or conducting, i.e., step S2 above, whereupon, as described above, the voltage at the second node N2 is greater than the voltage at the third node N3, the power unit 6 is off or not working, the disable input of the charging circuit 56 is asserted whereupon the charging circuit 56 is off and the auxiliary energy storage element 8 is not being charged, switching, by the startup controller 58, the N-FET to not conduct between its drain and source terminals, whereupon a voltage at the feedback input of the power converter 10 is increased due to the voltage drop across resistors R6 and R7 whereupon a voltage Vout of the power converter 10 to the second node N2 may be increased.

In this example, the voltage at the Vout terminal of the power converter 10 to the second node N2 may be increased in response to the startup controller 58 determining from the power unit controller 36 that the power unit 6 is not (or will soon not be) supplying the mains output power to the AC mains output 48 of the energy storage system 2. This increase in voltage at the second node N2 may be sensed by the current sensor 28 which, in combination with transistor T3 and resistors R3 and R4, may cause the disable input of the charging circuit 56 to be asserted whereupon the charging circuit 56 is disabled. Disabling the charging circuit 56 has the effect of preventing or avoiding the discharge of the auxiliary energy storage element 8 via the loop comprised of the power converter 10, the power delivery control element 16 (which in this example is on or conducting), the third node N3 (or the supply node 12), and the charging circuit 56.

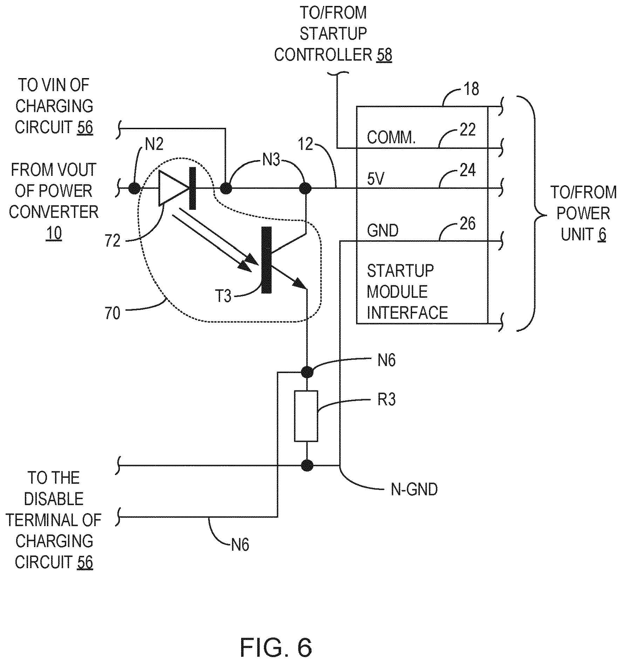

With reference to Fig. 6 and with continuing reference to Figs. 1 and 5, in some non-limiting embodiments, the power delivery control circuit 14 may comprise an optocoupler 70 acting as the power delivery control element 16 and the current sensor 28 in Fig. 1 and Fig. 5. As is known in the art, an optocoupler is a semiconductor device that allows an electrical signal to be transmitted between two isolated circuits and includes an LED 72 that emits infrared light in response current flowing therethrough and a photosensitive device, e.g., a transistor T3, that detects the light from the LED 72. In an example, the power delivery control circuit 14 may comprise the optocoupler 70 that includes the LED 72 coupled to the output of the power converter 10 to emit (or not emit) infrared light to the photosensitive device, e.g., transistor T3, coupled to the supply node 12 in response to the presence (or the absence) of the auxiliary supply current flowing from the output of the power converter 10 at the second node N2 toward the third node N3 or supply node 12.

In an example, the auxiliary supply current may flow through the LED 72, which may operate as a current sensor (e.g., in combination with transistor T3), when the voltage at a second node N2 is greater than the voltage at a third node N3 whereupon transistor T3 will be in an on state (due to the light output by the LED 72 in response to the auxiliary supply current flowing through the LED 72) whereupon the disable terminal of the charging circuit 56 is asserted whereupon the Vout terminal of the charging circuit 56 is disabled or off and not outputting a voltage whereupon the auxiliary energy storage element 8 is not being charged. In another example, the auxiliary supply current may not flow through the LED 72, which may operate as the current sensor, when the voltage at a second node N2 is less than or equal to a voltage at a third node N3 whereupon transistor T3 will be in an off state not outputting light. In this latter example, transistor T3 will be in an off state (due to the absence of light output by LED 72) whereupon the disable terminal of the charging circuit 56 is not asserted whereupon the Vout terminal of the charging circuit 56 is on and outputting a voltage whereupon the auxiliary energy storage element 8 is being charged.

Herein, the phrase "transistor T3" may, depending on the embodiment, be used in connection with the third bipolar junction transistor T3 in Figs. 1 and 5 or with the photosensitive device, e.g., transistor T3, in Fig. 6.

By preventing or avoiding the discharge of the auxiliary energy storage element 8 in this manner, the auxiliary energy storage element 8 is able to maintain a supply of electrical power for a longer period when the power unit 6 is off or not working. An advantage of this may be that the startup controller 58 is powered and fully operational when the power unit 6 transitions from an off or not working state or an on or working state whereupon the startup controller 58 is able to more quickly and readily control the operation of the power unit 6 via the power unit controller 36 of the power unit 6. This may be particularly advantageous where the startup controller 58 is controlling and/or synchronizing the operation of a number of power units 6 connected in series or parallel via the power unit controllers 36 of these power units 6.

The present teachings also disclose a system (e.g., a power supply system) comprising means to perform any of the methods (e.g., steps of any of those methods) herein disclosed. The present teachings further disclose a software product comprising instructions which when executed by a suitable system (such as a power supply system, e.g., by one or more processors of the system) cause the system to perform any of the methods (e.g., steps of any of those methods) herein disclosed.

Other non-limiting examples or aspects are set forth in the following illustrative and exemplary numbered clauses:
Clause 1: Disclosed is a method of managing power transfer between a startup module and a power unit of a power supply system. The startup module comprises at least one auxiliary energy storage element; and a first power converter for delivering auxiliary power to a supply node, wherein the auxiliary power is sourced from the auxiliary energy storage element. The power unit comprises: a second power converter operable to deliver power to at least the supply node, wherein the power delivered to the supply node by the second power converter is usable for charging the auxiliary energy storage element; wherein the power supply system further comprises: a charging circuit operative for charging the auxiliary energy storage element by receiving charging power via the supply node; and a power delivery control circuit comprising a current sensor disposed to detect current between an output of the first power converter and the supply node, said power delivery control circuit operative for controlling the delivery of the auxiliary power to the supply node; wherein, the method comprises: sensing, via the current sensor, a presence of an auxiliary supply current flowing from the output of the first power converter towards the supply node; and in response to sensing the auxiliary supply current, disabling the charging circuit.
Clause 2: the method of clause 1, wherein in response to sensing an absence of the auxiliary supply current, the method may further comprise enabling the charging circuit, thereby charging the auxiliary energy storage element by receiving charging power via the supply node.
Clause 3: the method of clause 1 or 2, wherein the power delivery control circuit may comprise at least one of: a circuit that operates in the nature of (e.g., as) an ideal diode or an optocoupler.
Clause 4: The method of any one of clauses 1-3, wherein the power delivery control circuit may comprise a field effect transistor (FET), wherein the FET may be operative in one state for conducting current between the output of the first power converter and the supply node and in another state for not conducting current between the output of the first power converter and the supply node.
Clause 5: The method of any one of clauses 1-4, wherein the current sensor may comprise bipolar junction transistors coupled to the respective output of the first power converter on one side of the FET and the supply node on another side of the FET. In an example, the power delivery control element and the current sensor may comprise a control component.
Clause 6: The method of any one of clauses 1-5, wherein the power unit may comprise at least one power module. Each power module may comprise at least one energy storage element, such as a lithium battery cell and/or a super capacitor and an inverter such as an H-bridge inverter. The power unit may also comprise at least one power unit controller for controlling the at least one power module.
Clause 7: The method of any one of clauses 1-6, wherein the power unit may comprise at least one of the following: at least one AC mains input for charging the at least one energy storage element of the at least one power module and the auxiliary energy storage element; and at least one AC mains output for providing mains output generated by converting DC voltage from the at least one energy storage element of the at least one power module to the at least one AC mains output.
Clause 8: The method of any one of clauses 1-7, wherein the power unit may comprise a multi-bridge rectifier for providing power at an input of the second power converter from the at least one AC mains input.
Clause 9: The method of any one of clauses 1-8, wherein the power unit may comprise a DC-DC converter for powering the power unit controller via the supply node. The power unit controller may be powered from one or both of the DC-DC converter or the auxiliary power.
Clause 10: The method of any one of clauses 1-9, wherein the startup module may further comprise a startup controller which may be powered via the auxiliary energy storage element. The startup controller may also manage functions of the startup module controlling the power unit.
Clause 11: The method of any one of clauses 1-10, wherein in response to the absence of sensing the auxiliary supply current, the method further may comprises reducing a voltage at the output of the first power converter to be lower than a voltage at the supply node.
Clause 12: A power supply system comprises a startup module comprising: at least one auxiliary energy storage element; and a first power converter for delivering auxiliary power from the auxiliary energy storage element to a supply node. The power supply system also comprises: a power unit comprising a second power converter for delivering power to the supply node, wherein the delivered power is usable for charging the auxiliary energy storage element in the startup module; a charging circuit operative for charging the auxiliary energy storage element by receiving charging power via the supply node; and a power delivery control circuit comprising a current sensor disposed to detect current between an output of the first power converter and the supply node, said power delivery control circuit operative for controlling the delivery of the auxiliary power to the supply node, wherein the power supply system is configured such that, in response to the current sensor sensing the auxiliary supply current, the charging circuit is disabled.
Clause 13: The power supply system of clause 12 may further comprise a switch responsive to a voltage at an output of the first power converter and a voltage at the supply node for respectively disabling and enabling the charging circuit in the respective presence and absence of the auxiliary supply current.
Clause 14: The power supply system of clause 12 or 13, wherein at least one of the following: the power delivery control circuit comprises a field effect transistor (FET), a circuit that operates in the nature of an ideal diode, or an optocoupler; the current sensor comprises bipolar junction transistors T1 and T2 coupled to the respective output of the first power converter on one side of the power delivery control circuit and the supply node on another side of the power delivery control circuit; and the auxiliary energy storage element is a rechargeable battery or a capacitor.
Clause 15: The power supply system of any one of clauses 12-14, wherein the power unit may comprise at least one of the following: a power module including an energy storage element, e.g., a lithium battery cell and/or a super capacitor, an inverter, e.g., an H-bridge inverter, and a power unit controller for controlling the power module; an AC mains input for charging the energy storage element and the auxiliary energy storage element; an AC mains output for providing mains output generated by converting DC voltage from the energy storage element to the AC mains output; a rectifier, e.g., multi-bridge rectifier, for providing power at an input of the second power converter, wherein the multi-bridge rectifier may include a 6-diode rectifier, for supplying power at the supply node regardless of which AC domain is active, i.e., eitherAC mains input, 240V AC output, or 110V AC output; and a DC-DC converter for powering the power unit controller via the supply node. The power unit may be powered either by the converter or the auxiliary power.
Clause 16: The power supply system of any one of clauses 12-15 may further comprise a feedback circuit operative under the control of a startup controller of the startup module for respectively increasing and decreasing a voltage output by the first power converter in response to the startup controller determining that the power unit will be supplying and not supplying the mains output to the AC mains output of the power unit.
Clause 17: A computer program product comprising computer-executable instructions for causing a startup controller of the startup module to perform the method of any one of clauses 1-11.
Clause 18: A method of controlling the charging of an auxiliary energy storage element of a startup module that includes a first node (N1) connecting a Vout of a charging circuit, a Vin of a power converter and a terminal, e.g., a positive terminal, of the auxiliary energy storage element; a second node (N2) connecting a Vout of the power converter, a drain terminal of a P-channel FET (P-FET) and an emitter of a first bipolar junction transistor (T1); a third (supply) node (N3) connecting a source terminal of the P-FET, an emitter of a second bipolar junction transistor (T2), an emitter of a third bipolar junction transistor (T3), a Vin of the charging circuit, and a voltage output of a power unit; a ground node (N-Gnd) connecting a negative terminal of the auxiliary energy storage element and collectors of T1, T2, and T3 via respective resistors R1, R2, and R3 coupled between the collectors of T1, T2, and T3 and the ground node; a fourth node (N4) connecting a resistor R4 that is coupled between a base of T3 and the fourth node, a collector of T2, and the resistor R2 that is coupled between the ground node and the fourth node; a fifth node (N5) connecting the base and collector of T1 and the resistor R1 that is coupled between the ground node and the fifth node; and a sixth node (N6) connecting the collector of T3 to a disable terminal of the charging circuit, wherein the method comprises:
   (a) charging, by the Vout of the charging circuit, the auxiliary energy storage element when a voltage at the second node is less than a voltage at the third node, e.g., when the power unit is working; and
   (b) not charging the auxiliary energy storage element when a voltage at the second node is greater than a voltage at the third node e.g., when the power unit is not working.
Clause 19: The method of clause 18, wherein during step (a): T1 is conducting; T2 is conducting; T3 is off; and the P-FET is off.
Clause 20: The method of clause 18, wherein during step (b): T1 is conducting; T2 is conducting; T3 is conducting; and the P-FET is conducting.
Clause 21: The method of clause 18, wherein the startup module further includes: the second node (N2) connected to a feedback input of the power converter via a resistor R5; the feedback input of the power converter further coupled to the ground node (N-Gnd) via series resistors R6 and R7, wherein one terminal of resistor R7 is connected to the ground node (N-Gnd); and an N-channel FET (N-FET) having a drain terminal connected to a node between resistors R6 and R7, a source terminal connected to the ground node (N-Gnd) and a gate terminal connected to a control output of a startup controller, wherein the method further comprises:
   when the P-FET is off or not conducting, switching, by the startup controller, the N-FET to conduct between its drain and source terminals, whereupon a voltage at the feedback input of the power converter is decreased by coupling said feedback input to the ground node N-Gnd via resistor R6 and the drain and source terminals of the N-FET whereupon a voltage at the Vout terminal of the power converter to the second node N2 may be decreased; and
   when the P-FET is conducting, not charging the auxiliary energy storage element.
Clause 22: The method of clause 18, wherein the startup module further includes: the second node (N2) connected to a feedback input of the power converter via a parallel combination of a capacitor (C) and a resistor R5; the feedback input of the power converter further coupled to the ground node (N-Gnd) via series resistors R6 and R7, wherein one terminal of resistor R7 is connected to the ground node (N-Gnd); and an N-channel FET (N-FET) having a drain terminal connected to a node between resistors R6 and R7, a source terminal connected to the ground node (N-Gnd) and a gate terminal connected to a control output of a startup controller, wherein the method further comprises:
   when the P-FET is off or not conducting, switching, by the startup controller, the N-FET to conduct between its drain and source terminals, whereupon a voltage at the feedback input of the power converter is decreased by coupling said feedback input to the ground node N-Gnd via resistor R6 and the drain and source terminals of the N-FET whereupon a voltage at the Vout terminal of the power converter to the second node N2 may be decreased; and
   when the P-FET is on or conducting, switching, by the startup controller, the N-FET to not conduct between its drain and source terminals, whereupon a voltage at the feedback input of the power converter is increased due to the voltage drop across resistors R6 and R7 whereupon a voltage Vout of the power converter to the second node N2 may be increased.
Clause 23: A method of controlling the charging of an auxiliary energy storage element of a startup module that includes: a first node (N1) connecting a Vout of a charging circuit, a Vin of a power converter and a positive terminal of the auxiliary energy storage element; a second node (N2) connecting a Vout of the power converter to a third node (N3) via an LED, wherein the third node is also connected to an emitter of a transistor (T3) and a voltage output of a power unit; a ground node (N-Gnd) connecting a negative terminal of the auxiliary energy storage element and a collector of the transistor via a resistor R3 coupled between the collector of the transistor and the ground node; and a fourth node (N6) connecting the collector of the transistor to a disable terminal of the charging circuit, wherein, in response to the LED generating and not generating light in response to current flowing and not flowing through the LED from the second node to the third node, the transistor is in a respective on or conducting state and an off or nonconducting state, wherein the method comprises: (a) charging, by the Vout of the charging circuit, the auxiliary energy storage element when a voltage at the second node is less than a voltage at the third node whereupon current does not flow through the LED; and (b) not charging the auxiliary energy storage element when a voltage at the second node is greater than a voltage at the third node whereupon current flows through the LED.
Clause 24: A system (e.g., a power supply system) comprising means to perform the steps of any of the above method clauses.

Although this disclosure has been described in detail for the purpose of illustration based on what is currently considered to be the most practical and preferred embodiments, it is to be understood that such detail is solely for that purpose and that the disclosure is not limited to the disclosed embodiments, but, on the contrary, is intended to cover modifications and equivalent arrangements that are within the spirit and scope of the appended claims. For example, it is to be understood that the present disclosure contemplates that, to the extent possible, one or more features of any embodiment can be combined with one or more features of any other embodiment.

## Claims

1. A method of managing power transfer between a startup module and a power unit of a power supply system, wherein:
the startup module comprises:
at least one auxiliary energy storage element; and
a first power converter for delivering auxiliary power to a supply node, wherein the auxiliary power is sourced from the auxiliary energy storage element;
wherein, the power unit comprises:
a second power converter operable to deliver power to at least the supply node, wherein the power delivered to the supply node by the second power converter is usable for charging the auxiliary energy storage element;
wherein the power supply system further comprises:
a charging circuit operative for charging the auxiliary energy storage element by receiving charging power via the supply node; and
a power delivery control circuit comprising a current sensor disposed to detect current between an output of the first power converter and the supply node, said power delivery control circuit operative for controlling the delivery of the auxiliary power to the supply node;
wherein, the method comprises:
sensing, via the current sensor, a presence of an auxiliary supply current flowing from the output of the first power converter towards the supply node; and
in response to sensing the auxiliary supply current, disabling the charging circuit.

2. The method of claim 1, wherein in response to sensing an absence of the auxiliary supply current, the method further comprises enabling the charging circuit, thereby charging the auxiliary energy storage element by receiving charging power via the supply node.

3. The method of claim 1 or 2, wherein the power delivery control circuit comprises at least one of: a circuit that operates in the nature of an ideal diode or an optocoupler.

4. The method of any of claims 1-3, wherein the power delivery control circuit comprises a field effect transistor (FET), wherein the FET is operative in one state for conducting current between the output of the first power converter and the supply node and in another state for not conducting current between the output of the first power converter and the supply node.

5. The method of any one of claims 1-4, wherein the power unit comprises at least one power module, and each power module comprises at least one energy storage element and an H-bridge inverter, and wherein the power unit comprises at least one power unit controller for controlling the at least one power module.

6. The method of any one of claims 1-5, wherein the power unit comprises at least one of the following:
at least one AC mains input for charging the at least one energy storage element of the at least one power module, and the auxiliary energy storage element; and
at least one AC mains output for providing mains output generated by converting DC voltage from the at least one energy storage element of the at least one power module to the at least one AC mains output.

7. The method of any one of claims 1-6, wherein the power unit comprises a DC-DC converter for powering the power unit controller of the power unit with power supplied via the supply node.

8. The method of any one of claims 1-7, wherein the startup module further comprises a startup controller which is powered by the auxiliary energy storage element.

9. The method of any one of claims 1-8, wherein in response to the absence of sensing the auxiliary supply current, the method further comprises reducing a voltage of the output of the first power converter to be lower than a voltage at the supply node.

10. A power supply system, comprising:
a startup module, comprising:
at least one auxiliary energy storage element; and
a first power converter for delivering auxiliary power from the auxiliary energy storage element to a supply node;
a power unit comprising a second power converter for delivering power to the supply node, wherein the delivered power is usable for charging the auxiliary energy storage element in the startup module;
a charging circuit operative for charging the auxiliary energy storage element by receiving charging power via the supply node; and
a power delivery control circuit comprising a current sensor disposed to detect current between an output of the first power converter and the supply node, said power delivery control circuit operative for controlling the delivery of the auxiliary power to the supply node,
wherein the power supply system is configured such that, in response to the current sensor sensing the auxiliary supply current, the charging circuit is disabled.

11. The power supply system of claim 10, further comprising a switch responsive to a voltage at an output of the first power converter and a voltage at the supply node configured for disabling and enabling the charging circuit in the respective presence and absence of the auxiliary supply current.

12. The power supply system of claim 10 or 11, wherein at least one of the following:
the power delivery control circuit comprises a field effect transistor (FET), a circuit that operates in the nature of an ideal diode, or an optocoupler;
the current sensor comprises bipolar junction transistors coupled to the respective output of the first power converter on one side of the power delivery control circuit and the supply node on another side of the power delivery control circuit; and
the auxiliary energy storage element is a rechargeable battery or a capacitor.

13. The power supply system of any one of claims 10-12, wherein the power unit further comprises at least one of the following:
a power module including an energy storage element, an inverter, and a power unit controller for controlling the power module;
an AC mains input for charging the energy storage element and the auxiliary energy storage element;
an AC mains output for providing mains output generated by converting DC voltage from the energy storage element to the AC mains output;
a multi-bridge rectifier for providing power at an input of the second power converter from the AC mains input; and
a DC-DC converter for powering the power unit controller with power from the supply node.

14. A system comprising means to perform the steps of any of the above method claims.

15. A computer program product comprising computer-executable instructions for causing a startup controller of the startup module to perform the method of any one of claims 1-9.
